(19) **Europäisches Patentamt / European Patent Office / Office européen des brevets**

(11) **EP 4 717 538 A1**

(12) # EUROPEAN PATENT APPLICATION

(43) Date of publication:
**01.04.2026 Bulletin 2026/14**

(21) Application number: **24202999.9**

(22) Date of filing: **26.09.2024**

(51) International Patent Classification (IPC):
**B60W 30/02** (2012.01)  **B60W 60/00** (2020.01)

(52) Cooperative Patent Classification (CPC):
**B60W 30/02; B60W 60/0015;** B60W 40/114;
B60W 2050/0033; B60W 2300/14; B60W 2520/10;
B60W 2552/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **SHREEKARA, Ramesh**
 **GÖTEBORG (SE)**

• **SHINGADE, Kartik**
 **GÖTEBORG (SE)**
• **ERDINC, Umur**
 **GÖTEBORG (SE)**
• **SADEGHI KATI, Maliheh**
 **ÖJERSJÖ (SE)**
• **JONASSON, Mats**
 **PARTILLE (SE)**

(74) Representative: **Ström & Gulliksson AB**
**P.O. Box 4188**
**203 13 Malmö (SE)**

(54) **MOTION CONTROL FOR VEHICLE COMBINATIONS**

(57) A computer system and computer-implemented method for determining a control input for a vehicle combination comprising a tractor unit and at least one trailing unit are disclosed. The computer system comprises processing circuitry configured to: acquire parameters of a manoeuvre to be performed by the vehicle combination; determine an objective for the manoeuvre based on the acquired parameters of the manoeuvre, the objective including one or more of reducing a swept path of the vehicle combination, reducing off-tracking of the vehicle combination, and reducing rearward amplification of the vehicle combination; acquire a plurality of cost functions for motion of the vehicle combination; select one the plurality of cost functions based on the determined obj ective for the manoeuvre; and determine one or more control inputs for the vehicle combination to perform the manoeuvre using the selected cost function.

300

| Acquiring parameters of a manoeuvre to be performed by a vehicle combination | 302 |
| Determining an objective for the manoeuvre based on the acquired parameters of the manoeuvre | 304 |
| Acquiring a plurality of cost functions for motion of the vehicle combination | 306 |
| Selecting one the plurality of cost functions based on the determined objective | 308 |
| Determining one or more control inputs for the vehicle combination to perform the manoeuvre using the selected cost function | 310 |

**FIG. 3**

EP 4 717 538 A1

**Description**

**TECHNICAL FIELD**

The disclosure relates generally to vehicle control. In particular aspects, the disclosure relates to motion control for vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In vehicle motion management, control of multi-unit vehicle combinations is challenging due to the complexity of coordinating and manoeuvring multiple vehicle units together. Unlike single vehicles, these vehicle combinations require careful consideration of each vehicle unit's dynamic and the interaction between them. These multi-unit configurations often exhibit complex interactions, such as inter-vehicle communication, varying states, and dynamic behaviours. Hence, there is a need for an advanced approach to ensure safe and precise control for multi-unit vehicle combinations.
It is therefore desired to provide systems, methods and other approaches for vehicle motion management that attempt to resolve or at least mitigate one or more of these issues.

**SUMMARY**

This disclosure provides systems, methods and other approaches for determining a control input for a vehicle combination. Based on parameters of a manoeuvre to be performed by the vehicle combination, an objective for the manoeuvre is determined, such as reducing a swept path of the vehicle combination, reducing off-tracking the vehicle combination, and reducing rearward amplification of the vehicle combination. Based on the determined objective, one of a plurality of cost functions is selected for use in determining the control input. The plurality of cost functions may comprise a first cost function based on a deviation of a path of a trailing unit of the vehicle combination from that of a tractor unit of the vehicle combination, a second cost function based on a deviation of a midpoint of an axle of the vehicle combination from a reference path, a third cost function based on a distance between an inner point and an outer point of a path traced by the vehicle combination, and a fourth cost function based on yaw amplification between units of the vehicle combination. The selected cost function is then used to determine a control input for the vehicle combination to perform the manoeuvre.
According to a first aspect of the disclosure, there is provided a computer system for determining a control input for a vehicle combination comprising a tractor unit and at least one trailing unit, the computer system comprising processing circuitry configured to: acquire parameters of a manoeuvre to be performed by the vehicle combination; determine an objective for the manoeuvre based on the acquired parameters of the manoeuvre, the objective including one or more of reducing a swept path of the vehicle combination, reducing off-tracking of the vehicle combination, and reducing rearward amplification of the vehicle combination; acquire a plurality of cost functions for motion of the vehicle combination, the plurality of cost functions comprising at least two of: a first cost function based on a deviation of a path of a trailing unit of the vehicle combination from a path of the tractor unit of the vehicle combination, a second cost function based on a deviation of a midpoint of an axle of each unit of the vehicle combination from a reference path, a third cost function based on a distance between an inner point and an outer point of a path traced by the vehicle combination, and a fourth cost function based on yaw amplification between units of the vehicle combination; select one the plurality of cost functions based on the determined objective for the manoeuvre; and determine one or more control inputs for the vehicle combination to perform the manoeuvre using the selected cost function.
The first aspect of the disclosure may seek to enable motion of a vehicle combination, in particular the lateral and/or yaw motion of the vehicle combination, to be controlled to perform a manoeuvre in an improved way. This is enabled by selecting a cost function having a frame of reference that is appropriate for a particular manoeuvre and objective, and determining a control input that reduced (e.g. minimises) the cost. This enables different constraints on manoeuvrability and lateral stability of the vehicle combination to be balanced to provide appropriate control of the vehicle combination. This ensures safety and efficiency in the operation of such vehicles.
Optionally in some examples, including in at least one preferred example, the parameters of the manoeuvre comprise one or more of an intended velocity of the vehicle combination, a turning radius, a turn angle, a turn length, and a friction coefficient. A technical benefit may include that specific parameters of the manoeuvre that affect motion of the vehicle combination can be taken into account appropriately.
Optionally in some examples, including in at least one preferred example, the plurality of cost functions are formulated based on a kinematic bicycle model and/or a kinetic bicycle model of the vehicle combination. A technical benefit may include that, as the simpler kinematic model is useful for analysing path tracking and for low-speed manoeuvres where dynamic effects are minimal, while the kinetic model incorporates the dynamics of the vehicle combination and is useful for understanding high-speed behaviours, stability, and the effects of external forces, appropriate functions to be selected based on vehicle speed as well as computational demands.

Optionally in some examples, including in at least one preferred example, the kinematic bicycle model and/or the kinetic bicycle model is formulated based on parameters of the vehicle combination comprising one or more of a number of units of the vehicle combination, a length of the vehicle combination, a type of available actuator, and a driving mode of the vehicle combination. A technical benefit may include that specific parameters of the vehicle combination that affect its motion can be taken into account appropriately.

Optionally in some examples, including in at least one preferred example, the processing circuitry is configured to select a cost function based on the kinematic bicycle model for manoeuvres below a threshold vehicle speed, and to select a cost function based on the kinetic bicycle model for manoeuvres above a threshold vehicle speed. A technical benefit may include that an appropriate model can be selected according to the speed of the manoeuvre, as the simpler kinematic model is useful for low-speed manoeuvres, while the kinetic model is useful for understanding high-speed behaviours.

Optionally in some examples, including in at least one preferred example, the processing circuitry is further configured to initialise values of the kinematic bicycle model and/or the kinetic bicycle model based on estimated states of the vehicle combination. For example, the the kinematic model can be used to provide a initialised variables for the kinetic model. A technical benefit may include that the model is provided with a 'warm start', which can improve computation speed and robustness.

Optionally in some examples, including in at least one preferred example, the processing circuitry is configured to: select the first cost function, the second cost function, or the third cost function to reduce a swept path of the vehicle combination; select the first cost function or the second cost function to reduce off-tracking of the vehicle combination; and select the fourth cost function to reduce rearward amplification of the vehicle combination. A technical benefit may include that a cost function having a frame of reference that is appropriate for a particular objective can be selected, which can therefore provide a more appropriate control input.

Optionally in some examples, including in at least one preferred example, the processing circuitry is configured to select one the plurality of cost functions based on an operation mode of the vehicle combination. A technical benefit may include that a cost function that is most appropriate for a particular mode operation can be selected, which can therefore provide a more appropriate control input.

Optionally in some examples, including in at least one preferred example, the processing circuitry is configured to: select the first cost function, the third cost function, or the fourth cost function for a manual operation mode of the vehicle combination; and select the second cost function, the third cost function, or the fourth cost function for an autonomous or semi-autonomous operation mode of the vehicle combination. A technical benefit may include that a cost function that is most appropriate for a particular mode operation can be selected, which can therefore provide a more appropriate control input.

Optionally in some examples, including in at least one preferred example, the processing circuitry is configured to determine the control input by solving the selected cost function to be below a threshold. A technical benefit may include that an optimal control input can be determined, for example by minimising the cost.

Optionally in some examples, including in at least one preferred example, the control input comprises one or more of a steering angle and a propulsion force for the vehicle combination. A technical benefit may include that the vehicle combination can be controlled via existing control interfaces to perform a manoeuvre in an improved way.

According to a second aspect of the disclosure, there is provided a vehicle comprising the computer system of any preceding claim. The second aspect of the disclosure may seek to provide a vehicle capable of being controlled to perform a manoeuvre in an improved way, in particular in relation to lateral and/or yaw motion of the vehicle

According to a third aspect of the disclosure, there is provided a computer-implemented method for determining a control input for a vehicle combination comprising a tractor unit and at least one trailing unit, the computer-implemented method comprising: acquiring, by the processing circuitry, parameters of a manoeuvre to be performed by the vehicle combination; determining an objective for the manoeuvre based on the acquired parameters of the manoeuvre, the objective including one or more of reducing a swept path of the vehicle combination, reducing off-tracking of the vehicle combination, and reducing rearward amplification of the vehicle combination; acquiring, by the processing circuitry, a plurality of cost functions for motion of the vehicle combination, the plurality of cost functions comprising at least two of: a first cost function based on a deviation of a path of a trailing unit of the vehicle combination from a path of the tractor unit of the vehicle combination, a second cost function based on a deviation of a midpoint of an axle of each unit of the vehicle combination from a reference path, a third cost function based on a distance between an inner point and an outer point of a path traced by the vehicle combination, and a fourth cost function based on yaw amplification between units of the vehicle combination; selecting, by the processing circuitry, one the plurality of cost functions based on the determined objective for the manoeuvre; and determining, by the processing circuitry, one or more control inputs for the vehicle combination to perform the manoeuvre using the selected cost function.

The third aspect of the disclosure may seek to enable motion of a vehicle combination, in particular the lateral and/or yaw motion of the vehicle combination, to be controlled to perform a manoeuvre in an improved way. This is enabled by selecting a cost function having a frame of reference that is appropriate for a particular manoeuvre and objective, and determining a control input that reduces (e.g. minimises) the cost. This enables different constraints on manoeuvrability and lateral stability of the vehicle combination to be balanced to provide appropriate control of the vehicle combination. This ensures safety and efficiency in the operation of such vehicles.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to be controlled to perform a manoeuvre in an improved way, in particular in relation to lateral and/or yaw motion of the vehicle.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to be controlled to perform a manoeuvre in an improved way, in particular in relation to lateral and/or yaw motion of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a side view of a vehicle combination according to an example.
**FIG. 2** schematically shows a top view of a vehicle combination according to an example.
**FIG. 3** is a flow chart of a computer-implemented method according to an example.
**FIG. 4** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

In vehicle motion management, control of multi-unit vehicle combinations is challenging due to the complexity of coordinating and manoeuvring multiple vehicle units together. Unlike single vehicles, these vehicle combinations require careful consideration of each vehicle unit's dynamic and the interaction between them. These multi-unit configurations often exhibit complex interactions, such as inter-vehicle communication, varying states, and dynamic behaviours. Hence, there is a need for an advanced approach to ensure safe and precise control for multi-unit vehicle combinations.

To remedy this, systems, methods and other approaches are provided for determining a control input for a vehicle combination. Based on parameters of a manoeuvre to be performed by the vehicle combination, an objective for the manoeuvre is determined, such as reducing a swept path of the vehicle combination, reducing off-tracking the vehicle combination, and reducing rearward amplification of the vehicle combination. Based on the determined objective, one of a plurality of cost functions is selected for use in determining the control input. The plurality of cost functions may comprise a first cost function based on a deviation of a path of a trailing unit of the vehicle combination from that of a tractor unit of the vehicle combination, a second cost function based on a deviation of a midpoint of an axle of the vehicle combination from a reference path, a third cost function based on a distance between an inner point and an outer point of a path traced by the vehicle combination, and a fourth cost function based on yaw amplification between units of the vehicle combination. The selected cost function is then used to determine a control input for the vehicle combination to perform the manoeuvre.

In this way, motion of a vehicle combination, in particular the lateral and/or yaw motion of the vehicle combination, can be controlled to perform a manoeuvre in an improved way. This is enabled by selecting a cost function having a frame of reference that is appropriate for a particular manoeuvre and objective, and determining a control input that reduces (e.g. minimises) the cost. This enables different constraints on manoeuvrability and lateral stability of the vehicle combination to be balanced to provide appropriate control of the vehicle combination. This ensures safety and efficiency in the operation of such vehicles.

The cost functions can be determined based on different vehicle models, in particular kinematic and kinetic bicycle models. The simpler kinematic model focuses on the geometric aspects of vehicle movement, and is useful for analysing path tracking and for low-speed manoeuvres where dynamic effects are minimal. The kinetic model incorporates the dynamics of the vehicle combination, which is useful for understanding high-speed behaviours, stability, and the effects of external forces. This allows appropriate functions to be selected based on vehicle speed as well as computational demands.

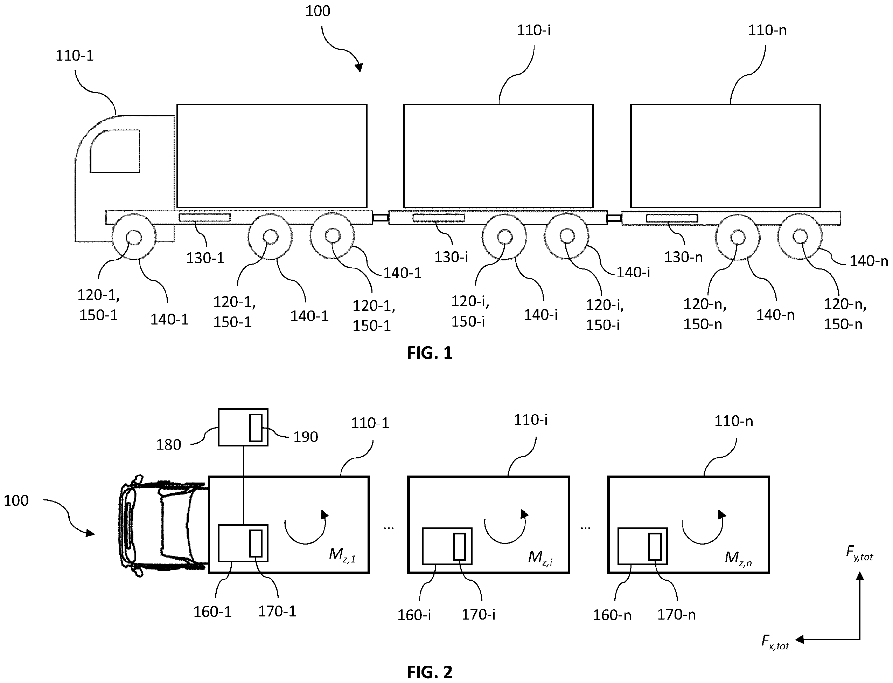

**FIG. 1** schematically shows a side view of an example vehicle combination **100** of the type considered in this disclosure. The vehicle combination **100** comprises a number of units **110,** including a tractor unit and at least one trailing unit. Each unit **110** may be given an index $i$, and the total number of units **110** in a vehicle combination **100** is designated $n$. Whilst two trailing units are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1,** the tractor unit **110-1** may also be used to store goods that are being transported by the vehicle combination **100.** A tractor unit may also be referred to as a truck.

A trailing unit, such as the trailing units **110-i, 110-n,** is generally used to store goods that are being transported by the vehicle combination **100.** A trailing unit may be a trailer, dolly, and the like. A trailing unit may also provide propulsion to the vehicle combination **100.** A trailing unit without a front axle, such as the trailing units **110-i, 110-n,** is known as a semitrailer. In vehicle combinations such as that shown in **FIG. 1,** vehicle motion management is available on a unit level to receive requests from a manual or virtual driver to coordinate the propulsion, braking and steering.

Whilst three tractor axles and two axles per trailer are shown, it will be appreciated that any suitable number of axles may be provide on the respective units **110.** It will also be appreciated that any number of the tractor axles and/or trailer axles may be driven axles, including zero (i.e. one of the units may include at least one driven axle while the other does not). It will also be appreciated that any suitable number of the tractor axles and/or trailer axles may be steered axles.

The vehicle combination **100** may comprise one or more sources or propulsion. For example, one or more of the units **110** may comprise one or more electrical machines **120** such as electric motors. Each unit **110** may comprise one or more batteries **130** configured to provide power to the electrical machines **120.** A vehicle combination **100** that uses only battery power is a battery electric vehicle (BEV). In some examples, for example in the case of a hybrid electric vehicle (HEV), a unit **110,** most often a tractor unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the wheels **140.** All units **110** may provide propulsion to the vehicle combination **100.** In the examples discussed herein, the vehicle combination **100** may be a BEV or an HEV.

The electrical machines **120** are configured to drive, e.g. provide torque and/or steering to, one or more axles or individual wheels **140** of the unit **110.** The electrical machines **120** of a unit **110** can supply either a positive (propulsion) or negative (braking) force. In some examples, electric motors may also be operated as generators, in order for the electric motors to generate braking force when required. The use of electrical machines **120** to supply a negative force is known as regenerative braking. The energy recovered from regenerative braking can be stored in the batteries **130,** and so regenerative braking is generally preferred over using service brakes **150.**

Furthermore, each unit **110** may comprise one or more sets of service brakes **150.** The service brakes **150** of a unit **110** can supply a negative (braking) force. The service brakes **150** may be, for example, frictional brakes such as pneumatic brakes. Pneumatic brakes use a compressor to fill the brake with air, which may be powered by the batteries **130.** In some examples, the brakes may be electro-mechanical brakes or hydraulic brakes.

The vehicle combination **100** may also comprise one or more auxiliary systems (not shown). The auxiliary systems may include auxiliary mechanical systems, such as alternators, power take-off (PTO) systems, and an air compressors, and auxiliary electrical systems, such as steering pumps, headlights, other light systems, ignition systems, audio systems, and air conditioning systems.

The ICE, electrical machines **120** and service brakes **150** are considered as actuators of the vehicle combination **100.** Other actuators may also be present. For example, steering actuators **150,** such as steering servo arrangements, may be provided, and may be implemented as electro-hydraulic actuators. It will be appreciated that each axle and/or wheel **140** may have an associated electrical machine **120,** set of service brakes **150,** and/or set of steering actuators.

The vehicle combination **100,** or indeed one or more (e.g. each) units **110,** can be considered to comprise two systems: a propulsion system comprising the components that are involved in propulsion of the vehicle combination **100,** and a braking system comprising the components that are involved in braking of the vehicle combination **100.** As such, the propulsion system can be considered to comprise one or more of the ICE, electrical machines **120,** the drivetrain, and batteries **130** of the vehicle combination **100,** while the braking system can be considered to comprise the ICE, the electrical machines **120,** the drivetrain, the batteries **130,** and the service brakes **150.** As such, there is some overlap between the propulsion system and the braking system.

**FIG. 2** schematically shows a top view of an example vehicle combination **100** of the type considered in this disclosure. Similarly to the example of **FIG. 1,** the vehicle combination **100** comprises a number of units **110,** including a tractor unit and a plurality of trailing units. **FIG. 2** also shows the requested global forces of the vehicle combination **100** as a whole. Examples of requested global forces of the vehicle combination **100** as a whole may e.g. include a total longitudinal/axial force $F_{x.tot}$ a total lateral/radial force $F_{y,tot}$, and/or one or more yaw moments $M_{z,i}$ for the respective vehicle units **110.** In order to control motion of a vehicle combination **100,** the requested global forces of the vehicle combination **100** must be determined and resolved. This may be achieved by a control system of the vehicle combination **100** that determines control signals based on a requested reference input and certain operating conditions of the vehicle combination **100.**

In the example of **FIG. 2,** the vehicle combination **100** includes a set of controllers **160** comprising processing circuitry **170.** The controllers **160** are configured to control components of the vehicle combination **100,** for example the electrical machines **120,** the batteries **130,** and the service brakes **150.** In the example of **FIG. 2,** the vehicle combination **100** includes a controller **160** for each respective unit **110,** although it will be appreciated that any suitable number of controllers **160** may be present. The controllers **160** together form a distributed control allocation system for the vehicle combination **100.** In this system, the control allocation may be performed on multiple levels, i.e. first on a level of the vehicle combination **100** as a whole, and then on a level of each vehicle unit **110** individually. Vehicle motion management may therefore be available on a unit level to receive requests from a manual or virtual driver to coordinate the propulsion, braking and steering of the vehicle combination **100.** The controllers **160** may be microcontrollers.

The controllers **160** may receive control signals from a computer system **180** comprising processing circuitry **190.** The computer system **180** may be a vehicle control unit configured to perform various vehicle (unit) control functions, such as vehicle motion management. The computer system **180** may be local to the vehicle combination **100.** For example, the computer system **180** may be implemented in combination with one of the controllers **160,** often the controller **160-1** of the tractor unit **110-1.** In this case, the controller **160-1** of the tractor unit **110-1** may be considered a global controller configured to determine control inputs for each unit **110.** Alternatively, the computer system **180** may be a remote system implemented at a distance from the vehicle combination **100.** In this example, the computer system **180** may be communicatively coupled to one or more of the controllers **160** (for example the global controller). The computer system **180** may be communicatively coupled to the controller(s) **160** in any suitable way, for example via a circuit or any other wired, wireless, or network connection known in the art. Furthermore, the communicative coupling may be implemented as a direct connection between the controller(s) **160** and the computer system **180,** or may be implemented as a connection via one or more intermediate entities.

One function of the controller(s) **160** and the computer system **180** is to provide control inputs for the vehicle combination **100,** for example torque, force, or steering requests. These control inputs should enable a requested manoeuvre for the vehicle combination **100,** for example, straight-line driving, cornering, braking and the like, whilst ensuring safe and efficient motion of the vehicle combination **100.** To this end, these control inputs may be determined to meet a certain objective for the manoeuvre, including reducing (e.g. minimising) a swept path of the vehicle combination **100,** reducing (e.g. minimising) off-tracking of the vehicle combination **100,** and reducing (e.g. minimising) rearward amplification of the vehicle combination **100.**

To determine safe and efficient motion of the vehicle combination **100** during a manoeuvre, a plurality of cost functions can be formulated. The cost functions describe a cost associated with the particular manoeuvre, which may reflect a certain objective for the motion of the vehicle combination **100.** By solving the cost function, e.g. minimising the cost, one or more control inputs can be determined for the vehicle combination **100** that provide safe and efficient motion of the vehicle combination **100** and meet the objective.

To formulate a cost function, one or more models of the vehicle combination **100** may be used. In particular, a kinematic bicycle model and/or a kinetic bicycle model of the vehicle combination **100** may be used. A kinematic bicycle model is based on geometric relations and velocity of the vehicle combination **100,** and is relatively simplistic. A kinetic bicycle model additionally takes into account forces acting on the vehicle combination **100,** and is relatively complex.

The models may be formulated in any suitable manner dependent on the configuration of the vehicle combination. For example, the models may be formulated based on one or more of the number of units of the vehicle combination **100,** dimension (e.g. length) of the vehicle combination **100,** a type of available actuator(s) of the vehicle combination **100** (e.g. number and position of steerable and/or propelled axles), and an operation mode (e.g. autonomous control, manual control, or semi-autonomous control) of the vehicle combination **100.**

In some examples, the models may be single-track bicycle models, where the left and right wheels of an axle are merged and represented as a single wheel. In some examples, the models may be based on planar dynamics, (i.e. longitudinal, lateral and yaw motion of the vehicle combination **100).** In some examples, the axles on each unit **110** of the vehicle combination **100** may be lumped.

The kinematic model may be derived following the approach of instantaneous centres, where the motion of each unit **110** of the vehicle combination **100** is considered as rotation around an instantaneous centre formed when perpendicular lines drawn from the velocity vectors of the axles intersect. This enables the geometric relations between several units **110** of the vehicle combination **100** to be understood. To further simplify the model, an assumption may be made that the centre of gravity (CoG) of each unit **110** is located at the midpoint of its rear axle. Based on the geometric relations, equations for the turning radius of each axle of the vehicle combination **100** may be derived. In order use these equations in a cost function, the equations may be made time-dependent as the radius of a unit **110** can be expressed as a ratio of longitudinal velocity to the yaw rate of the unit **110.** The model may be derived for vehicle combinations **100** having steerable or non-steerable axles.

To define the system dynamics, state variables and control actions are defined. In some examples, it is assumed that the CoG location of the tractor unit **110-1** is available from the sensor data, meaning the positions of the trailing unit(s) **110-i** can be interpolated using their respective yaw angles. As a result, a state vector and a control vector can be defined as follows:

$$X = [X_1, Y_1, \phi_i] \tag{1}$$

$$U = [\delta_i] \tag{2}$$

where $(X_1, Y_1)$ is the global coordinate of CoG location of the tractor unit **110-1**, $\phi_i$ is the yaw angle of respective units 110-i, and $\delta_i$ is a vector of the steering angles of the respective units **110,** such that

$$\dot{X} = f(X, U) \tag{3}$$

which has the following representation in explicit form:

$$\dot{X_1}(s) = \cos(\phi_1) \tag{4}$$

$$\dot{Y_1}(s) = \sin(\phi_1) \tag{5}$$

$$\dot{\phi_1}(s) = \frac{1}{R_i} \tag{6}$$

where $\dot{\phi_i}$ is the yaw rate of respective units **110-i,** and $R_i$ is the turning radius of respective units 110-i.

In some examples, the kinematic model may be valid for steady state conditions. In some examples, the kinematic model may assume zero lateral velocity at the wheels i.e. zero side slip at the wheels. In some examples, the kinematic model may assume no longitudinal slip at the wheels. The kinematic model may be appropriate for lower speed manoeuvres since, at lower speed, there are fewer dynamic effects to be taken into consideration.

The kinetic model may be derived using the Newtonian approach, which involves setting up force and moment balance equations for each unit **110** of the vehicle combination **100.** The kinetic model may focus solely on planar dynamics, meaning roll and pitch motions may be neglected. Consequently, each unit **110** may have three equations governing lateral force balance, longitudinal force balance, and moment balance along the z-axis.

Similarly to the kinematic system dynamics, a state vector and a control vector can be defined as follows:

$$X = \left[X_1, Y_1, \phi_i, v_{1x}, v_{1y}, \dot{\phi_i}\right] \tag{7}$$

$$U = [F_{xi}, \delta_i] \tag{8}$$

where $v_{1x}$ is the longitudinal velocity of the tractor unit **110-1**, $v_{1y}$ is the lateral velocity of the tractor unit **110-1,** and $F_{xi}$ is the propulsion force to be applied to the propelled axles of the vehicle combination **100.** This has the following representation in explicit form:

$$\dot{X_1}(s) = \frac{v_{x1}(t) * \cos(\phi_1) - v_{y1}(t) * \sin(\phi_1)}{v_{x1}(t)} \tag{9}$$

$$Y_1\dot{}(s) = \frac{v_{y1}(t) * \cos(\phi_1) + v_{x1}(t) * \sin(\phi_1)}{v_{x1}(t)} \qquad (10)$$

$$\phi_i\dot{}(s) = \frac{\dot{\phi_i}(t)}{v_{x1}(t)} \qquad (11)$$

$$v_{x1}\dot{}(s) = \frac{\dot{v_{x1}}(t)}{v_{x1}(t)} \qquad (12)$$

$$v_{y1}\dot{}(s) = \frac{\dot{v_{y1}}(t)}{v_{x1}(t)} \qquad (13)$$

$$\ddot{\phi_i}(s) = \frac{\ddot{\phi_i}(t) - \dot{\phi_i}(s) * v_{x1}\dot{}(s) * v_{x1}(t)}{(v_{x1}(t))^2} \qquad (14)$$

where $\ddot{\phi_i}$ is the yaw acceleration of respective units **110-i.** Here, *s* signifies the equation is in the path distance domain and t signifies the equation is in the the time domain

In some examples, the kinetic model may include a linear tire model. This means that a linear relationship between slip angle and lateral force is assumed when taking into account lateral and longitudinal slip. The kinetic model may be appropriate for higher speed manoeuvres as it can account for dynamic effects.

Based on the models discussed above, cost functions can be formulated for achieving different objectives. Three particular objectives are considered here: reducing a swept path of the vehicle combination **100,** reducing off-tracking of the vehicle combination 100, and reducing rearward amplification of the vehicle combination **100.**

The width of the swept path of a vehicle combination **100** is an important parameter for comparing the performance of different articulated vehicle configurations. It measures the ability of the vehicle combination **100** to navigate turns (by indicating the maximum radial distance between the inner and outermost points of the path of the vehicle combination **100** when traveling around a curvature. This metric helps assess how well the vehicle combination **100** can manoeuvre in tight, e.g. circular, spaces (such as roundabouts).

Off-tracking is when the wheels of a trailing unit **110-i** do not follow the path of the wheels of the tractor unit **110-1.** For example, when an articulated vehicle combination **100** makes a turn at a low speed, the wheels of the rearmost trailer axle may follow a path that is inside of the path of a steered axle of the tractor unit **110-1.** This phenomenon is called low-speed off-tracking, and is a measure of the swept path of the vehicle combination **100** and its lateral road space requirement. At higher speeds, the wheels of the rearmost trailer axle may follow a path that is outside of the path of a steered axle of the tractor unit **110-1** due to increased lateral acceleration. This phenomenon is known as high-speed off-tracking. Both low-speed and high-speed off-tracking may be measured as the maximum radial distance between the path of the midpoint of the steered axle of the tractor unit **110-1** and the path of the midpoint of the rearmost trailer axle.

Rearward amplification occurs when each unit in the vehicle combination **100** experiences different levels of lateral acceleration, for example when the vehicle combination **100** makes a sudden lateral movement. This lateral acceleration increases progressively towards the rearmost unit **110-n** of the vehicle combination **100.** Lower values of rearward amplification indicate better performance of the vehicle combination **100,** with an ideal rearward amplification value being one, meaning there is no amplification of lateral acceleration from the front to the rear of the vehicle combination **100.**

Based on the models discussed above, cost functions can be formulated for achieving these different objectives. Such cost functions can be formulated in many different ways, although it has been found that four particular ways of formulating a cost function are advantageous.

A first cost function is based on a deviation of a path of a trailing unit **110-i** of the vehicle combination **100** from a path of the tractor unit **110-1** of the vehicle combination **100.** This cost function is formulated to replicate a manual driving scenario, where the tractor unit **110-1** is controlled by a steering input from the driver. In this scenario, the midpoint of the axle of the tractor unit **110-1** (when the kinematic model is used) or CoG of the tractor unit **110-1** (when the kinetic model is used) is used as the reference trajectory for the trailing unit(s) **110-i.** The cost function is designed to determine steering angles for the trailing unit(s) **110-i** that penalise the deviation of the trailing unit(s) **110-i** from the reference trajectory.

If the path traced by the axle midpoint or CoG of the tractor unit **110-1** is given by $(X_{tractor}, Y_{tractor})$ and the position of the following unit's CoG is given by $(X_i, Y_i)$. The deviation e of a trailing unit **110-i** from the reference path is calculated accounting for a delay in travelled distance (meaning when both tractor unit **110-1** and trailing unit **110-i** are at the same location):

$$e_i = \left( (X_{tractor} - X_i) \sin \phi_i + (Y_{tractor} - Y_i) \cos \phi_i \right)^2 \qquad (15)$$

such that $e_i < r_{ot}$, where, $r_{ot}$ is the infinity norm variable, where $i \geq 2$.

The first cost function may then be given by:

$$F = w_1 \sum r_{ot} + w_2 \sum U \qquad (16)$$

where $w_1$ and $w_2$ are weights set by an operator, and $U = [\delta_i]^T$ for the kinematic model and $U = [F_{x1}, F_{xi}, \delta_i]^T$ for the kinetic model, where $i \geq 2$.

The first cost function is suitable for reducing a swept path of the vehicle combination **100**, as the swept path of the vehicle is reduced when the trailing unit(s) **110-i** follow the tractor unit **110-i.** The first cost function is also suitable for reducing off-tracking of the vehicle combination **100**, which is defined by how well the trailing unit(s) **110-i** follow the tractor unit **110-1.** The first cost function is suitable for a manual operation mode where the steering angle and propulsion force for the tractor unit **110-1** are controlled by a driver.

A second cost function is formulated based on a deviation of a midpoint of an axle of each unit **110-i** of the vehicle combination **100** from a reference path. This cost function is aimed more towards an autonomous or semi-autonomous operation mode, where the controller also values to the steering of the tractor unit **110-1** in addition to the trailing unit(s) **110-i.** In this case, the system has trajectory information from which reference coordinates may be generated. The cost function penalises the deviation of an axle midpoint from this reference path. At least one axle midpoint per unit **110** is used. If there are multiple axles on a trailing unit **110-i,** these can be considered as a lumped axle by effective wheelbase. The tractor unit **110-1** may have two axle midpoints (i.e. front and rear).

In this scenario, the reference coordinates of the path are given by $(X_{path}, Y_{path})$ and the position of the axle mid points is given by $(X_i, Y_i)$. The deviation e of a unit **110-i** from the reference path is calculated accounting for the delay in travelled distance:

$$e_i = \left( \left(X_{path} - X_i\right) \sin \phi_i + \left(Y_{path} - Y_i\right) \cos \phi_i \right)^2 \qquad (17)$$

such that $e_i < r_{ot}$, where $i >\_ 1$.

The second cost function may then be given by:

$$F = w_1 \sum r_{ot} + w_2 \sum U \qquad (18)$$

where $w_1$ and $w_2$ are weights set by an operator, and $U = [\delta_i]^T$ for the kinematic model and $U = [F_{xi}, \delta_i]^T$ for the kinetic model, where $i \geq 1$

The second cost function is suitable for reducing a swept path of the vehicle combination **100**, as the swept path of the vehicle is reduced when all units **110** follow the same path. The second cost function is also suitable for reducing off-tracking of the vehicle combination **100**, which will be minimal when all units **110** follow the same path. The second cost function is particularly suitable for an autonomous or semi-autonomous operation mode, as the the controller assigns an input to each of the tractor unit **110-1** and trailing unit(s) **110-i.**

A third cost function is formulated based on a distance between an inner point and an outer point of a path traced by the vehicle combination **100**. This cost function is formulated to implement the definition of a swept path, i.e. the distance between the inner and outer extremities of the vehicle combination **100** while travelling through a corner. In multi-unit vehicle combinations **100** with multiple actuators, there is a possibility that any of the leading or trailing corners of every unit could form the outermost boundary of the swept path. Hence, an array of distances is calculated from the leading edge of the inner and outer corners of tractor unit **110-1** to the leading and trailing edges of the trailing unit(s) **110-i.**

In this scenario, $(X_{tractor_{in}}, Y_{tractor_{in}})$ and $(X_{tractor_{out}}, Y_{tractor_{out}})$ are the leading edges of the body of the tractor unit **110-1** on inner and outer sides (say left and right), while $(X_{i_{in}}, Y_{i_{in}})$ and $(X_{i_{out}}, Y_{i_{out}})$ are the leading and trailing edges of the body of the trailing unit(s) **110-i** on inner and outer sides.

The swept path measurement from the inner side of the tractor unit **110-1** is given by:

$$SP_{in} = \left( \left( X_{tractor_{in}} - X_{i_{out}} \right) \sin \phi_i + \left( Y_{tractor_{in}} - Y_{i_{out}} \right) \cos \phi_i \right)^2 \qquad (19)$$

such that $SP_{in} < r_{ot1}$, where, $r_{ot1}$ is a first infinity norm variable, where $i \geq 2$.

The swept path measurement from the outer side of the tractor unit **110-1** is given by:

$$SP_{out} = \left( \left( X_{tractor_{out}} - X_{i_{in}} \right) \sin \phi_i + \left( Y_{tractor_{out}} - Y_{i_{in}} \right) \cos \phi_i \right)^2 \qquad (20)$$

such that $SP_{out} < r_{ot2}$ where, $r_{ot2}$ is a second infinity norm variable, where $i \geq 2$.

The third cost function may then be given by

$$F = w_1 \sum r_{ot1} + w_2 \sum r_{ot2} + w_3 \sum U \qquad (21)$$

where $w_1$, $w_2$, and $w_3$ are weights set by an operator, and $U = [\delta_i]^T$ for the kinematic model and $U = [F_{xi}, \delta_i]^T$ for the kinetic model, where $i >_{\_} 1$.

The third cost function is suitable for reducing a swept path of the vehicle combination 100. This is because this cost function provides less aggressive articulation angles between units, which is a good indicator for safe operations. The third cost function may be preferred where the first and/or second cost functions result in unsafe or aggressive articulation angles. The third cost function is suitable for manual, autonomous and semi-autonomous operation modes. In the manual mode of operation, the steering angle and propulsion force for the tractor unit **110-1** are controlled by a driver, and the solution to equation (21) has $i \geq 2$.

A fourth cost function is formulated based on based on yaw amplification between units **110** of the vehicle combination **110**. This cost function is built to achieve the objective of reducing rearward amplification and is mainly aimed at high speed avoidance manoeuvres such as single and double lane changes. Rearward amplification may be defined as the ratio of the maximum yaw rate of the rearmost unit **110-n** to the maximum yaw rate of the tractor unit **110-1**. As this may cause an infeasibility during optimisation, a subtraction may be used instead.

The fourth cost function may then be given by

$$F = w_1 \sum e_j + w_2 \sum U \qquad (22)$$

where $w_1$ and $w_2$ are weights set by an operator, $e_j$ is a difference in yaw rate of the rearmost trailing unit **110-n** to the yaw rate of the tractor unit **110-1** at instances $j$ where the tractor unit **110-1** has a non-zero steering angle. $U = [F_{xi}, \delta_i]^T$ for the kinetic model, where $i \geq 1$. As the fourth cost function is aimed at higher speed manoeuvres, the kinematic model may be less appropriate. In some examples, difference in yaw rate relative to the tractor unit **110-1** could be determined for one or more units between the tractor unit **110-1** and the rearmost trailing unit **110-n.**

The fourth cost function is suitable for reducing rearward amplification of the vehicle combination **100,** and can be used in manual, autonomous and semi-autonomous operation modes.

Each of the cost functions defined in equations (16), (18), (21), and (22) include a first part giving the cost of state deviation and a second part giving the cost of the controlled input. The cost of state deviation follows an infinity norm constraint that is a variable is assigned with an inequality constraint on the state deviation, which limits the maximum absolute value of state deviation, which helps to ensure that no single variable dominates the solution. Each of the cost functions may be used for vehicle combinations **100** having one or more trailing units **110-i.** It is noted that, as the number of trailing units **110-i** increases, the number of states and therefore the state deviations will also increase.

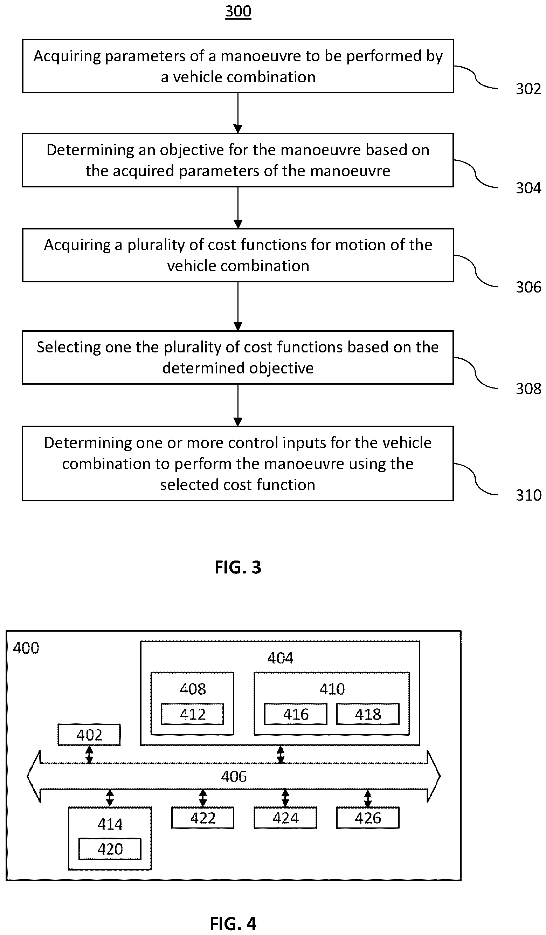

**FIG. 3** is a flow chart of a computer-implemented method **300** according to an example. The method **300** is for determining a control input for a vehicle combination, such as the vehicle combination **100.** The method **300** enables motion of a vehicle combination, in particular the lateral and/or yaw motion, to be controlled to perform a manoeuvre in an improved way by selecting a cost function having a frame of reference that is appropriate for a particular manoeuvre, and determining a control input that reduces (e.g. minimises) the cost. The method **300** may be implemented by processing circuitry of a computer system (e.g., the processing circuitry **170** of the controller(s) **160,** or the processing circuitry **190** of the computer system **180** described in relation to **FIG. 2).**

At **302,** parameters of a manoeuvre to be performed by the vehicle combination **100** are acquired. The parameters of the manoeuvre may comprise one or more of an intended velocity, e.g. longitudinal velocity, of the vehicle combination **100,** turning radius, a turn angle, a turn length, and a friction coefficient associated with the manoeuvre. A manoeuvre may have any suitable geometry, including one or more of a 180 degree roundabout manoeuvre, a 90 degree turning manoeuvre, an S-curve turning manoeuvre, and a single and/or double lane change.

At **304,** an objective for the manoeuvre is determined based on the acquired parameters of the manoeuvre. For example, in a 90° turn, off-tracking may be the primary concern, and reduction of off-tracking may therefore be set as the objective for the manoeuvre. In a sharper turn, the swept path of the vehicle combination **100** may be the primary concern, and reduction of the swept path may therefore be set as the objective for the manoeuvre. In a lane change, the swept path and off-tracking are less likely to be an issue, meaning rearward amplification is of more concern.

At **306,** a plurality of cost functions for motion of the vehicle combination **100** are acquired. As discussed above, cost functions may be formulated based on one or more models of the vehicle combination **100,** for example a kinematic bicycle model and/or a kinetic bicycle model of the vehicle combination **100.** The models may be formulated in any suitable manner dependent on the configuration of the vehicle combination **100.** The plurality of cost functions includes two or more of the first, second, third, and fourth cost functions discussed above. For example, and combination of two, three, or four of the cost functions defined in equations (16), (18), (21), and (22) may be acquired.

Optionally, values of the kinematic bicycle model and/or the kinetic bicycle model may be initialised based on estimated states of the vehicle combination **100.** As discussed above, the kinematic and kinetic bicycle model comprise a state vector and a control vector as defined in equations (1), (2), (7), and (8), comprising variables including a CoG location of the tractor unit **110-1,** yaw angles and yaw rates of respective units **110-i,** steering angle of respective units **110-i,** the longitudinal and lateral velocities of the tractor unit **110-1,** and a propulsion force to be applied to the propelled axles of the vehicle combination **100.** The values of these variables should be initialised to start the optimisation process. These values may be based on the latest state of the vehicle combination **100,** or may be estimated using a simpler model of the vehicle combination **100.** For example, the the kinematic model can be used to provide a initialised variables for the kinetic model. In one example, integration is performed to solve a nonlinear state space model. If the optimisation is based on a receding horizon approach and the trajectory of the manoeuvre is known, a fairly accurate initial estimate of the optimal values of position and yaw angles of the vehicle combination **100** can be determined. For example, the state trajectory may be discretised in to N intervals and system dynamics simulated using a Runge-Kutta integrator of order 4 (RK4) with a number of integration steps defined, for example, by 0.5m.

At **308,** one the plurality of cost functions is selected based on the determined objective for the manoeuvre, in line with the advantages of each cost function discussed above. For example, if it is desired to reduce a swept path of the vehicle combination **100,** the first, second, or third cost function may be selected. If it is desired to reduce off-tracking of the vehicle combination **100,** the first or second cost function may be selected. If it is desired to reduce rearward amplification of the vehicle combination **100,** the fourth cost function may be selected.

Furthermore, the cost function may be selected based on an operation mode of the vehicle combination **100** (e.g. autonomous control, manual control, or semi-autonomous control). For example, the first cost function is more appropriate for manual (i.e. driver-operated) control, while the second cost function is appropriate for autonomous (and indeed semi-autonomous) control. The third and fourth cost functions are appropriate for all modes of operation.

Furthermore, the underlying model of the cost function may be selected based on the intended velocity of the vehicle combination **100.** For example, a cost function based on the kinematic bicycle model may be selected for manoeuvres below a threshold vehicle speed, as there are fewer dynamic effects to be taken into consideration. On the other hand, a cost function based on the kinetic bicycle model may be selected for manoeuvres above a threshold vehicle speed in order to account for increased dynamic effects.

At **310,** one or more control inputs are determined for the vehicle combination **100** to perform the manoeuvre. The one or more control inputs are determined using the selected cost function and the acquired parameters of the manoeuvre. In particular, the cost function may be solved such that the cost is below a threshold (e.g. minimised). This can be performed using optimal control, which is the process of determining a control input for a dynamic system such that a certain optimality criterion is achieved. This involves finding the best possible way to control a system to achieve desired outcomes while minimising or maximising specific performance measures.

Correct setting of constraints can also help to ensure the optimisation of the selected cost function is performed within the realistic limitations of the actuators of the vehicle combination **100** and also ensure the safe operation of the vehicle combination **100,** not leading to unsafe modes such as j ack-knifing or trailer swing. For example, limits on the steering angle, articulation angle(s), and maximum force (e.g. based on the limit of a traction ellipse for each axle) can also be used as constraints when solving the selected cost function.

For cost functions based on a kinematic model, constraints may be set with respect to the initial and final positions and angles of the tractor unit **110-1,** as the model does not involve any forces and the only actuation is with respect to the steering angles of the units **110.** The steering angles are also limited to a range that is achievable in real life. With the inclusion of wheel forces in the kinetic model, it becomes important to ensure the optimisation follows the traction limits of the wheels, and hence a constraint may be added such that the ability of generating longitudinal and lateral forces at the contact patches for each axle respects a traction ellipse for each axle.

The one or more control inputs comprise a steering angle and/or a propulsion force for the vehicle combination **100**. As discussed above, for a kinematic model, a control vector can be defined as $U = [\delta_i]$, while for a kinetic model a control vector can be defined as $U = [F_{xi}, \delta_i]$. Once the optimally allocated control inputs are computed, the input signals can be sent to the actuators of the vehicle combination **100** once it reaches a desired location on the path for which the control input was computed.

In some examples, the one or more control inputs may comprise torque vectoring, which dynamically adjusts the amount of torque sent to each wheel individually. This helps the vehicle combination **100** maintain better control, especially during cornering or in challenging driving conditions. For this, the vehicle model upon which the cost functions are formulated may be a two-track model.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (160, 180, 400) for determining a control input for a vehicle combination (100) comprising a tractor unit (110-1) and at least one trailing unit (110-i), the computer system (160, 180, 400) comprising processing circuitry (170, 190, 402) configured to: acquire parameters of a manoeuvre to be performed by the vehicle combination (100); determine an objective for the manoeuvre based on the acquired parameters of the manoeuvre, the objective including one or more of reducing a swept path of the vehicle combination (100), reducing off-tracking of the vehicle combination (100), and reducing rearward amplification of the vehicle combination (100); acquire a plurality of cost functions for motion of the vehicle combination (100), the plurality of cost functions comprising at least two of: a first cost function based on a deviation of a path of a trailing unit (110-i) of the vehicle combination (100) from a path of the tractor unit (110-1) of the vehicle combination (100), a second cost function based on a deviation of a midpoint of an axle of each unit (110) of the vehicle combination (100) from a reference path, a third cost function based on a distance between an inner point and an outer point of a path traced by the vehicle combination (100), and a fourth cost function based on yaw amplification between units (110) of the vehicle combination (100); select one of the plurality of cost functions based on the determined objective for the manoeuvre; and determine one or more control inputs for the vehicle combination (100) to perform the manoeuvre using the selected cost function.

Example 2: The computer system (160, 180, 400) of claim 1, wherein the parameters of the manoeuvre comprise one or more of an intended velocity of the vehicle combination (100), a turning radius, a turn angle, a turn length, and a friction coefficient.

Example 3: The computer system (160, 180, 400) of claim 1 or 2, wherein the plurality of cost functions are formulated based on a kinematic bicycle model and/or a kinetic bicycle model of the vehicle combination (100).

Example 4: The computer system (160, 180, 400) of claim 3, wherein the kinematic bicycle model and/or the kinetic bicycle model is formulated based on parameters of the vehicle combination (100) comprising one or more of a number of units (110) of the vehicle combination (100), a length of the vehicle combination (100), a type of available actuator, and a driving mode of the vehicle combination (100).

Example 5: The computer system (160, 180, 400) of claim 3 or 4, wherein the processing circuitry (170, 190, 402) is configured to select a cost function based on the kinematic bicycle model for manoeuvres below a threshold vehicle speed, and to select a cost function based on the kinetic bicycle model for manoeuvres above a threshold vehicle speed.

Example 6: The computer system (160, 180, 400) of any of claims 3 to 5, wherein the processing circuitry (170, 190, 402) is further configured to initialise values of the kinematic bicycle model and/or the kinetic bicycle model based on estimated states of the vehicle combination (100).

Example 7: The computer system (160, 180, 400) of any preceding claim, wherein the processing circuitry (170, 190, 402) is configured to: select the first cost function, the second cost function, or the third cost function to reduce a swept path of the vehicle combination (100); select the first cost function or the second cost function to reduce off-tracking of the vehicle combination (100); and select the fourth cost function to reduce rearward amplification of the vehicle combination (100).

Example 8: The computer system (160, 180, 400) of any preceding claim, wherein the processing circuitry (170, 190, 402) is configured to select one the plurality of cost functions based on an operation mode of the vehicle combination (100).

Example 9: The computer system (160, 180, 400) of claim 8, wherein the processing circuitry (170, 190, 402) is configured to: select the first cost function, the third cost function, or the fourth cost function for a manual operation mode of the vehicle combination (100); and select the second cost function, the third cost function, or the fourth cost function for an autonomous or semi-autonomous operation mode of the vehicle combination (100).

Example 10: The computer system (160, 180, 400) of any preceding claim, wherein the processing circuitry (170, 190, 402) is configured to determine the control input by solving the selected cost function to be below a threshold.

Example 11: The computer system (160, 180, 400) of any preceding claim, wherein the control input comprises one or more of a steering angle and a propulsion force for the vehicle combination (100).

Example 12: A vehicle (100) comprising the computer system (160, 180, 400) of any preceding claim.

Example 13: A computer-implemented method (300) for determining a control input for a vehicle combination (100) comprising a tractor unit (110-1) and at least one trailing unit (110-i), the computer-implemented method (300) comprising: acquiring (302), by the processing circuitry (170, 190, 402), parameters of a manoeuvre to be performed by the vehicle combination (100); determining (304) an objective for the manoeuvre based on the acquired parameters of the manoeuvre, the objective including one or more of reducing a swept path of the vehicle combination (100), reducing off-tracking of the vehicle combination (100), and reducing rearward amplification of the vehicle combination (100); acquiring (304), by the processing circuitry (170, 190, 402), a plurality of cost functions for motion of the vehicle combination (100), the plurality of cost functions comprising at least two of: a first cost function based on a deviation of a path of a trailing unit (110-i) of the vehicle combination (100) from a path of the tractor unit (110-1) of the vehicle combination (100), a second cost function based on a deviation of a midpoint of an axle of each unit (110) of the vehicle combination (100) from a reference path, a third cost function based on a distance between an inner point and an outer point of a path traced by the vehicle combination (100), and a fourth cost function based on yaw amplification between units (110) of the vehicle combination (100); selecting (308), by the processing circuitry (170, 190, 402), one of the plurality of cost functions based on the determined objective for the manoeuvre; and determining (310), by the processing circuitry (170, 190, 402), one or more control inputs for the vehicle combination (100) to perform the manoeuvre using the selected cost function.

Example 14: The computer-implemented method (300) of claim 13, wherein the parameters of the manoeuvre comprise one or more of an intended velocity of the vehicle combination (100), a turning radius, a turn angle, a turn length, and a friction coefficient.

Example 15: The computer-implemented method (300) of claim 13 or 14, wherein the plurality of cost functions are formulated based on a kinematic bicycle model and/or a kinetic bicycle model of the vehicle combination (100).

Example 16: The computer-implemented method (300) of claim 15, wherein the kinematic bicycle model and/or the kinetic bicycle model is formulated based on parameters of the vehicle combination (100) comprising one or more of a number of units (110) of the vehicle combination (100), a length of the vehicle combination (100), a type of available actuator, and a driving mode of the vehicle combination (100).

Example 17: The computer-implemented method (300) of claim 15 or 16, comprising selecting, by the processing circuitry (170, 190, 402), a cost function based on the kinematic bicycle model for manoeuvres below a threshold vehicle speed, and to select a cost function based on the kinetic bicycle model for manoeuvres above a threshold vehicle speed.

Example 18: The computer-implemented method (300) of any of claims 15 to 17, further comprising initialising, by the processing circuitry (170, 190, 402), values of the kinematic bicycle model and/or the kinetic bicycle model based on estimated states of the vehicle combination (100).

Example 19: The computer-implemented method (300) of any of claims 13 to 18, comprising: selecting, by the processing circuitry (170, 190, 402), the first cost function, the second cost function, or the third cost function to reduce a swept path of the vehicle combination (100); selecting, by the processing circuitry (170, 190, 402), the first cost function or the second cost function to reduce off-tracking of the vehicle combination (100); and selecting, by the processing circuitry (170, 190, 402), the fourth cost function to reduce rearward amplification of the vehicle combination (100).

Example 20: The computer-implemented method (300) of any of claims 13 to 19, comprising selecting, by the processing circuitry (170, 190, 402), one the plurality of cost functions based on an operation mode of the vehicle combination (100).

Example 21: The computer-implemented method (300) of claim 20, comprising: selecting, by the processing circuitry (170, 190, 402), the first cost function, the third cost function, or the fourth cost function for a manual operation mode of the vehicle combination (100); and selecting, by the processing circuitry (170, 190, 402), the second cost function, the third cost function, or the fourth cost function for an autonomous or semi-autonomous operation mode of the vehicle combination (100).

Example 22: The computer-implemented method (300) of any of claims 13 to 21, comprising determining, by the processing circuitry (170, 190, 402), the control input by solving the selected cost function to be below a threshold.

Example 23: The computer-implemented method (300) of any of claims 13 to 22, wherein the control input comprises one or more of a steering angle and a propulsion force for the vehicle combination (100).

Example 24: A computer program product comprising program code for performing, when executed by processing circuitry (170, 190, 402), the computer-implemented method (300) of any of claims 13 to 23.

Example 25: A non-transitory computer-readable storage medium comprising instructions, which when executed by processing circuitry (170, 190, 402), cause the processing circuitry to perform the computer-implemented method (300) of any of claims 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  A computer system (160, 180, 400) for determining a control input for a vehicle combination (100) comprising a tractor unit (110-1) and at least one trailing unit (110-i), the computer system (160, 180, 400) comprising processing circuitry (170, 190, 402) configured to:

    acquire parameters of a manoeuvre to be performed by the vehicle combination (100);
    determine an objective for the manoeuvre based on the acquired parameters of the manoeuvre, the objective including one or more of reducing a swept path of the vehicle combination (100), reducing off-tracking of the vehicle combination (100), and reducing rearward amplification of the vehicle combination (100);
    acquire a plurality of cost functions for motion of the vehicle combination (100), the plurality of cost functions comprising at least two of:

       a first cost function based on a deviation of a path of a trailing unit (110-i) of the vehicle combination (100) from a path of the tractor unit (110-1) of the vehicle combination (100),
a second cost function based on a deviation of a midpoint of an axle of each unit (110) of the vehicle combination (100) from a reference path,
a third cost function based on a distance between an inner point and an outer point of a path traced by the vehicle combination (100), and
a fourth cost function based on yaw amplification between units (110) of the vehicle combination (100);

select one of the plurality of cost functions based on the determined objective for the manoeuvre; and
determine one or more control inputs for the vehicle combination (100) to perform the manoeuvre using the selected cost function.

2. The computer system (160, 180, 400) of claim 1, wherein the parameters of the manoeuvre comprise one or more of an intended velocity of the vehicle combination (100), a turning radius, a turn angle, a turn length, and a friction coefficient.

3. The computer system (160, 180, 400) of claim 1 or 2, wherein the plurality of cost functions are formulated based on a kinematic bicycle model and/or a kinetic bicycle model of the vehicle combination (100).

4. The computer system (160, 180, 400) of claim 3, wherein the kinematic bicycle model and/or the kinetic bicycle model is formulated based on parameters of the vehicle combination (100) comprising one or more of a number of units (110) of the vehicle combination (100), a length of the vehicle combination (100), a type of available actuator, and a driving mode of the vehicle combination (100).

5. The computer system (160, 180, 400) of claim 3 or 4, wherein the processing circuitry (170, 190, 402) is configured to select a cost function based on the kinematic bicycle model for manoeuvres below a threshold vehicle speed, and to select a cost function based on the kinetic bicycle model for manoeuvres above a threshold vehicle speed.

6. The computer system (160, 180, 400) of any of claims 3 to 5, wherein the processing circuitry (170, 190, 402) is further configured to initialise values of the kinematic bicycle model and/or the kinetic bicycle model based on estimated states of the vehicle combination (100).

7. The computer system (160, 180, 400) of any preceding claim, wherein the processing circuitry (170, 190, 402) is configured to:

select the first cost function, the second cost function, or the third cost function to reduce a swept path of the vehicle combination (100);
select the first cost function or the second cost function to reduce off-tracking of the vehicle combination (100); and
select the fourth cost function to reduce rearward amplification of the vehicle combination (100).

8. The computer system (160, 180, 400) of any preceding claim, wherein the processing circuitry (170, 190, 402) is configured to select one the plurality of cost functions based on an operation mode of the vehicle combination (100).

9. The computer system (160, 180, 400) of claim 8, wherein the processing circuitry (170, 190, 402) is configured to:

select the first cost function, the third cost function, or the fourth cost function for a manual operation mode of the vehicle combination (100); and
select the second cost function, the third cost function, or the fourth cost function for an autonomous or semi-autonomous operation mode of the vehicle combination (100).

10. The computer system (160, 180, 400) of any preceding claim, wherein the processing circuitry (170, 190, 402) is configured to determine the control input by solving the selected cost function to be below a threshold.

11. The computer system (160, 180, 400) of any preceding claim, wherein the control input comprises one or more of a steering angle and a propulsion force for the vehicle combination (100).

12. A vehicle (100) comprising the computer system (160, 180, 400) of any preceding claim.

13. A computer-implemented method (300) for determining a control input for a vehicle combination (100) comprising a

tractor unit (110-1) and at least one trailing unit (110-i), the computer-implemented method (300) comprising:

acquiring (302), by the processing circuitry (170, 190, 402), parameters of a manoeuvre to be performed by the vehicle combination (100);

determining (304) an objective for the manoeuvre based on the acquired parameters of the manoeuvre, the objective including one or more of reducing a swept path of the vehicle combination (100), reducing off-tracking of the vehicle combination (100), and reducing rearward amplification of the vehicle combination (100);

acquiring (304), by the processing circuitry (170, 190, 402), a plurality of cost functions for motion of the vehicle combination (100), the plurality of cost functions comprising at least two of:

a first cost function based on a deviation of a path of a trailing unit (110-i) of the vehicle combination (100) from a path of the tractor unit (110-1) of the vehicle combination (100),

a second cost function based on a deviation of a midpoint of an axle of each unit (110) of the vehicle combination (100) from a reference path,

a third cost function based on a distance between an inner point and an outer point of a path traced by the vehicle combination (100), and

a fourth cost function based on yaw amplification between units (110) of the vehicle combination (100);

selecting (308), by the processing circuitry (170, 190, 402), one of the plurality of cost functions based on the determined objective for the manoeuvre; and

determining (310), by the processing circuitry (170, 190, 402), one or more control inputs for the vehicle combination (100) to perform the manoeuvre using the selected cost function.

**14.** A computer program product comprising program code for performing, when executed by processing circuitry (170, 190, 402), the computer-implemented method (300) of claim 13.

**15.** A non-transitory computer-readable storage medium comprising instructions, which when executed by processing circuitry (170, 190, 402), cause the processing circuitry to perform the computer-implemented method (300) of claim 13.

**FIG. 1**

**FIG. 2**

300

| Acquiring parameters of a manoeuvre to be performed by a vehicle combination | 302 |

| Determining an objective for the manoeuvre based on the acquired parameters of the manoeuvre | 304 |

| Acquiring a plurality of cost functions for motion of the vehicle combination | 306 |

| Selecting one the plurality of cost functions based on the determined objective | 308 |

| Determining one or more control inputs for the vehicle combination to perform the manoeuvre using the selected cost function | 310 |

**FIG. 3**

400
404
408
412
410
416
418
402
406
414
420
422
424
426

**FIG. 4**

**Europäisches Patentamt**
**European Patent Office**
**Office européen des brevets**

# EUROPEAN SEARCH REPORT

**Application Number**

**EP 24 20 2999**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/415746 A1 (GHANDRIZ TOHEED [SE] ET AL) 28 December 2023 (2023-12-28) * paragraphs [0099] - [0107]; claim 1; figure 10 * | 1-15 | INV. B60W30/02 B60W60/00 |
| A | CN 118 494 469 B (UNIV JILIN) 6 September 2024 (2024-09-06) * paragraphs [0018], [0117] - [0119], [0132] - [0133]; figure 2 * | 1-15 | |
| A | WO 2023/192987 A1 (CONTINENTAL AUTONOMOUS MOBILITY US LLC [US]) 5 October 2023 (2023-10-05) * paragraphs [0001], [0030], [0039], [0043] - [0051], [0076] - [0077]; figure 1 * | 1-15 | |
| A | US 2024/010186 A1 (DHAENS MIGUEL [BE] ET AL) 11 January 2024 (2024-01-11) * claim 1; figure 1 * | 1-15 | |

**TECHNICAL FIELDS SEARCHED (IPC)**

B60W

The present search report has been drawn up for all claims

| Place of search | Date of completion of the search | Examiner |
|---|---|---|
| Munich | 12 March 2025 | Rameau, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2999

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | | Publication date |
|---|---|---|---|---|
| US 2023415746 A1 | 28-12-2023 | CN | 116472505 A | 21-07-2023 |
| | | EP | 4247686 A1 | 27-09-2023 |
| | | US | 2023415746 A1 | 28-12-2023 |
| | | WO | 2022106005 A1 | 27-05-2022 |
| CN 118494469 B | 06-09-2024 | NONE | | |
| WO 2023192987 A1 | 05-10-2023 | CN | 118805179 A | 18-10-2024 |
| | | EP | 4500394 A1 | 05-02-2025 |
| | | WO | 2023192987 A1 | 05-10-2023 |
| US 2024010186 A1 | 11-01-2024 | CN | 117416170 A | 19-01-2024 |
| | | EP | 4306342 A1 | 17-01-2024 |
| | | US | 2024010186 A1 | 11-01-2024 |

EPO FORM P0459

For more details about this annex : see Official Journal of the European Patent Office, No. 12/82